# EUROPEAN PATENT APPLICATION

(11) **EP 4 492 087 A1**
(43) Date of publication of application: **15.01.2025**
(21) Application number: 23766525.2
(22) Date of filing: 20.02.2023
(51) Int. Cl.: G01S 7/526, G01S 15/10, G01S 15/931, G08G 1/16

(54) **OBJECT DETECTION DEVICE**

(30) Priority: 07.03.2022 JP 2022034148
(71) Applicant: AISIN CORPORATION, Kariya-shi, Aichi 448-8650 (JP)
(72) Inventor: SUGAE, Ippei, Kariya-shi, Aichi 448-8650 (JP); INABA, Hisashi, Kariya-shi, Aichi 448-8650 (JP)
(74) Representative: TBK
(86) International application number: PCT/JP2023/006030
(87) International publication number: WO 2023/171346

(57) **Abstract**

An object detection device is configured to be mounted to a movable body and configured to detect an object present around the movable body, and includes: a wave transmitter configured to transmit a transmission wave corresponding to a transmission signal; a wave receiver configured to receive, as a reception wave, the transmission wave reflected by the object; a relative speed estimation part configured to estimate a relative speed between the movable body and the object; a correlation processing part configured to change, in accordance with the relative speed, a window width of a reference window that defines the number of pulses of the transmission signal to be correlated with a reception signal corresponding to the reception wave when a correlation value corresponding to similarity between the transmission signal and the reception signal is obtained; and a detection part configured to detect information on the object, in a case where the correlation value is determined to indicate similarity at a level equal to or higher than a predetermined level.

## Description

### TECHNICAL FIELD

The present disclosure relates to an object detection device.

### BACKGROUND ART

Conventionally, there is a known object detection device that detects information on an object, such as a distance to the object, by transmitting an ultrasonic wave as a transmission wave, and by receiving a reception wave that is the transmission wave returned after being reflected by the object. For example, Patent Literature 1 proposes a technique that can change, in a case where an object detection device is mounted on a movable body, a range of a relative speed of an object to be detected in accordance with a speed of the movable body while improving a signal-to-noise (SN) ratio of a reception signal.

### CITATION LIST

### PATENT LITERATURE

Patent Literature 1: JP 2012-255667 A

### SUMMARY OF INVENTION

### TECHNICAL PROBLEMS

In a conventional object detection device, it is known that a burst wave with a long pulse length is transmitted, a reflection wave reflected by an object is received, and then correlation processing is executed by using a reference signal equivalent to the transmission wave. Then, when the object detection device is mounted on a movable body (vehicle or the like) to obtain information on the object, and when the correlation processing is executed on the reception wave by using the burst transmission wave with a long pulse length as the reference signal, an influence of a Doppler shift occurring between the movable body and the object tends to increase, and variation in a correlation result obtained after the correlation processing tends to increase. In particular, the variation increases as the relative speed increases. In the technique of Patent Literature 1 described above, demodulation is performed for each code in accordance with the relative speed. However, when the demodulation is performed for each code, there has been a problem that response cannot be sufficiently made to a change in the relative speed and accuracy of detecting the object cannot be sufficiently obtained.

Therefore, one aspect of the present disclosure provides an object detection device that can, when an influence of a Doppler shift is present between a movable body and an object, minimize the influence of the Doppler shift, reduce variation in a correlation result obtained after correlation processing, and stabilize performance for detecting the object, regardless of magnitude of a relative speed.

### SOLUTIONS TO PROBLEMS

An object detection device as an example of the present disclosure is an object detection device configured to be mounted to a movable body and configured to detect an object present around the movable body, and includes: a wave transmitter configured to transmit a transmission wave corresponding to a transmission signal; a wave receiver configured to receive, as a reception wave, the transmission wave reflected by the object; a relative speed estimation part configured to estimate a relative speed between the movable body and the object; a correlation processing part configured to change, in accordance with the relative speed, a window width of a reference window that defines the number of pulses of the transmission signal to be correlated with a reception signal corresponding to the reception wave when a correlation value corresponding to similarity between the transmission signal and the reception signal is obtained; and a detection part configured to detect information on the object, in a case where the correlation value is determined to indicate similarity at a level equal to or higher than a predetermined level. According to this configuration, the window width of the reference window used when the correlation value is obtained is changed in accordance with the relative speed between the movable body (object detection device) and the object. That is, the number of pulses referred to when correlation is obtained is changed. As a result, regardless of the magnitude of the relative speed, it is possible to improve the SN ratio and contribute to stabilization of performance for detecting the obj ect.

Further, the correlation processing part of the object detection device described above may change the window width in units of code length of the transmission signal. According to this configuration, the correlation processing is simplified, and it is possible to contribute to reduction in the processing load.

### BRIEF DESCRIPTION OF DRAWINGS

FIG. 1 is an exemplary and schematic view showing, as viewed from above, an appearance of a vehicle provided with an object detection system including object detection devices according to an embodiment.
FIG. 2 is an exemplary and schematic block diagram showing schematic hardware configurations of an electronic control unit (ECU) and one of the object detection devices of the object detection system according to the embodiment.
FIG. 3 is an exemplary and schematic diagram for describing an outline of a technique with which the object detection device according to the embodiment detects a distance to an object.
FIG. 4 is an exemplary and schematic block diagram showing a detailed configuration of the object detection device according to the embodiment.
FIG. 5 is an exemplary and schematic diagram showing a reception signal (reception waveform) received by a reception unit of the object detection device according to the embodiment.
FIG. 6 is an exemplary and schematic diagram showing variation in signal level (a correlation result) of the reception signal exhibited after correlation processing, in a case where a window width of a reference window for defining the number of pulses referred to when the correlation processing is executed is set to a width for referring to the number of pulses corresponding to the entire code length of a transmission signal, in the object detection device according to the embodiment.
FIG. 7 is an exemplary and schematic diagram showing a case in which a window width of a reference window for defining the number of referred pulses of a transmission signal to be correlated with a reception signal is set to a window width corresponding to code length of 1, in the object detection device according to the embodiment.
FIG. 8 is an exemplary and schematic diagram showing variation in signal level (a correlation result) of the reception signal exhibited after correlation processing, in a case where the window width of the reference window for defining the number of pulses referred to when the correlation processing is executed is set to the window width shown in FIG. 7, in the object detection device according to the embodiment.
FIG. 9 is an exemplary and schematic diagram showing a case in which the window width of the reference window for defining the number of referred pulses of a transmission signal to be correlated with a reception signal is set to a window width corresponding to a pulse length of one pulse, in the object detection device according to the embodiment.
FIG. 10 is an exemplary and schematic diagram showing variation in signal level (a correlation result) of the reception signal exhibited after correlation processing, in a case where the window width of the reference window for defining the number of pulses referred to when the correlation processing is executed is set to the window width shown in FIG. 8, in the object detection device according to the embodiment.
FIG. 11 is an exemplary and schematic diagram showing another window width of the reference window for defining the number of referred pulses of a transmission signal to be correlated with a reception signal, in the object detection device according to the embodiment.
FIG. 12 is an exemplary flowchart showing flow of processing in the object detection device according to the embodiment.

### DESCRIPTION OF EMBODIMENT

Hereinafter, an embodiment and modifications of the present disclosure will be described with reference to the drawings. The configurations of the embodiment and the modifications described below, and the operations and effects brought by the configurations are merely examples, and are not limited to those in the following description.

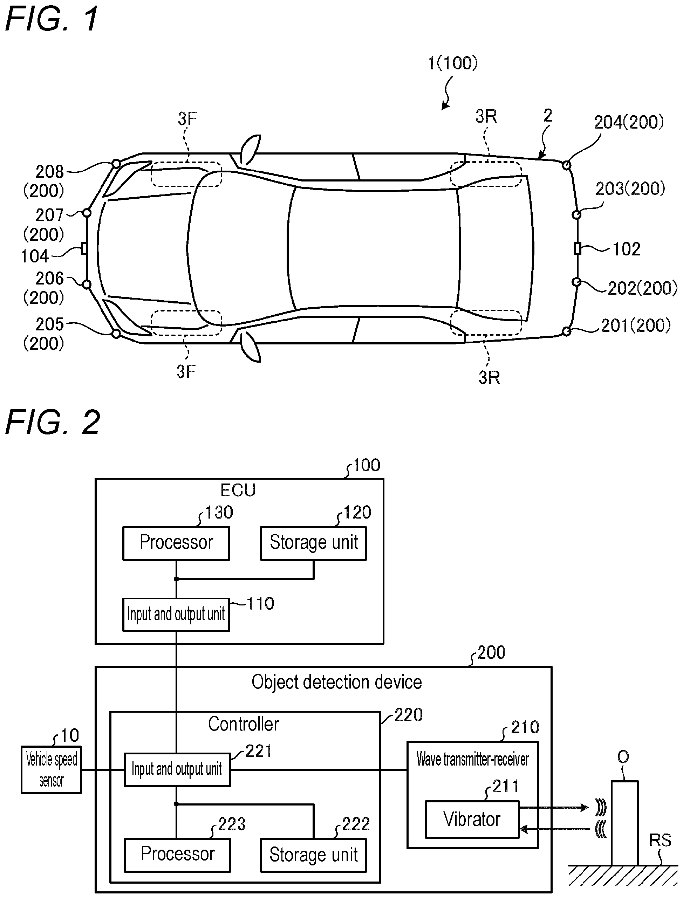

FIG. 1 is an exemplary and schematic view showing, as viewed from above, an appearance of a vehicle 1 provided with an object detection system including object detection devices according to the embodiment.

As shown in FIG. 1, the object detection system includes an electronic control unit (ECU) 100 mounted inside the four-wheeled vehicle 1 including a pair of front wheels 3F and a pair of rear wheels 3R, and the object detection devices 201 to 208 mounted on an exterior of the vehicle 1.

In the example shown in FIG. 1, as an example, the object detection devices 201 to 204 are installed (arranged) at different positions at predetermined intervals in the vehicle width direction on, for example, a rear bumper at the rear end of a vehicle body 2 provided as an exterior of the vehicle 1. In addition, the object detection devices 205 to 208 are installed (arranged) at different positions at predetermined intervals in the vehicle width direction on, for example, a front bumper at the front end of the vehicle body 2.

Here, in the present embodiment, respective hardware configurations and functions included in the object detection devices 201 to 208 are the same. Thus, hereinafter, for the sake of simplifying the description, the object detection devices 201 to 208 may be collectively referred to as object detection device(s) 200. In addition, the predetermined intervals between the object detection devices 200 can be appropriately adjusted in accordance with the shape of the bumper or the like, and the predetermined intervals need not be strictly the same. Also, regarding the vertical direction, the object detection devices 200 need not be aligned along a strict vehicle width direction as long as the object detection devices 200 are arranged within a range in which the bumper is formed, and slight misalignment may be acceptable.

In addition, in the present embodiment, the installation positions of the object detection devices 200 are not limited to those of the example shown in FIG. 1. The object detection devices 200 may be installed on a side surface of the vehicle body 2 in addition to at least one of the rear bumper or the front bumper. Moreover, the object detection device 200 may be installed at a position of either the rear bumper or the front bumper. Further, in the embodiment, the number of the object detection devices 200 is not limited to that in the example shown in FIG. 1.

In addition, the vehicle body 2 is provided with, for example, two imaging units 102, 104. Each of the imaging units 102, 104 is, for example, a digital camera incorporating an imaging element such as a charge coupled device (CCD) or a complementary metal-oxide semiconductor (CMOS) image sensor (CIS). The imaging units 102, 104 can output moving image data (captured image data) at a predetermined frame rate. Each of the imaging units 102, 104 includes a wide-angle lens or a fisheye lens, and can capture an image within a range of, for example, 140° to 220° in the horizontal direction. Thus, each of the imaging units 102, 104 can sequentially capture an image including a road surface on which the vehicle 1 can move, a stop line, a parking frame line, a division line, or the like marked on the road surface, or an object (for example, a wall, a tree, a person, a bicycle, a vehicle, or the like) present around or far from the vehicle 1, and can output those captured as the captured image data.

The imaging unit 102 is provided, for example, on the inner side with respect to a rear window or on the rear bumper, on the rear side of the vehicle body 2. The imaging unit 104 is provided, for example, on the inner side with respect to a windshield, on the front bumper, or on a front grille, on the front side of the vehicle body 2. The captured image data that has been captured is subjected to arithmetic processing or image processing, and can be used for generating an image with a wider view angle and for generating a virtual viewpoint image viewed from above. In addition, the captured image data acquired by being captured by the imaging unit 102 or the imaging unit 104 can be used for an estimation in which a relative speed between an object included in the captured image data and the host vehicle (vehicle 1) is estimated on the basis of the captured image data and the host vehicle speed, and can be used for correlation processing in the object detection device 200.

The object detection system according to the present embodiment transmits and receives an ultrasonic wave on the basis of a configuration as described below, and acquires a time lag between the transmission and the reception, or the like, whereby the object detection system detects information on an object (for example, an object O shown in FIG. 2 to be described later) including another vehicle, a person, or the like present in the surroundings.

FIG. 2 is an exemplary and schematic block diagram showing hardware configurations of the ECU 100 and the object detection device 200 of the object detection system according to the embodiment.

As shown in FIG. 2, the ECU 100 has a hardware configuration similar to that of an ordinary computer. More specifically, the ECU 100 includes an input and output unit 110, a storage unit 120, and a processor 130.

The input and output unit 110 is an interface for implementing transmission and reception of information between the ECU 100 and the outside (the object detection device 200 in the example shown in FIG. 1).

The storage unit 120 includes a main storage unit such as a read only memory (ROM) or a random access memory (RAM) and/or an auxiliary storage unit such as a hard disk drive (HDD) or a solid state drive (SSD).

The processor 130 handles various types of processing executed in the ECU 100. The processor 130 includes an arithmetic unit such as a central processing unit (CPU). The processor 130 reads and executes a computer program stored in the storage unit 120 to implement various functions such as parking assistance and the like.

On the other hand, as shown in FIG. 2, the object detection device 200 includes a wave transmitter-receiver 210 and a controller 220. With these configurations, the object detection device 200 is configured as a vehicle-mounted sonar that is an example of a vehicle-mounted sensor configured to detect a distance to an object (object O) present around the vehicle 1.

The wave transmitter-receiver 210 includes a vibrator 211 such as a piezoelectric element, and the transmission and reception of an ultrasonic wave is achieved through the vibrator 211.

More specifically, the wave transmitter-receiver 210 transmits, as a transmission wave, an ultrasonic wave generated in response to vibration of the vibrator 211, and receives, as a reception wave, vibration of the vibrator 211 caused by the return of the ultrasonic wave that has been transmitted as the transmission wave and that has then been reflected by an object present outside. In the example shown in FIG. 2, a road surface RS and an object O installed on the road surface RS or movable on the road surface RS are illustrated as objects that can reflect the ultrasonic wave transmitted from the wave transmitter-receiver 210.

Note that, in the example shown in FIG. 2, a configuration is illustrated in which both the transmission of the transmission wave and the reception of the reception wave are achieved through the single wave transmitter-receiver 210 including the single vibrator 211. However, the technique according to the embodiment is, of course, applicable to a configuration in which a configuration on the transmission side and a configuration on the reception side are separated, such as a configuration in which a vibrator used in transmission of a transmission wave and a vibrator used in reception of a reception wave are separately provided.

The controller 220 has a hardware configuration similar to that of an ordinary computer. More specifically, the controller 220 includes an input and output unit 221, a storage unit 222, and a processor 223.

The input and output unit 221 is an interface for implementing transmission and reception of information between the controller 220 and the outside (the ECU 100 and the wave transmitter-receiver 210 in the example shown in FIG. 1). In addition, the input and output unit 221 receives input of vehicle speed information acquired by a vehicle speed sensor 10. Further, the input and output unit 221 receives, via the input and output unit 110, input of the captured image data acquired by being captured by the imaging unit 102 or the imaging unit 104, and the input captured image data is used for the estimation in which the relative speed between the vehicle 1 and the object O is estimated on the basis of the vehicle speed information and the captured image data.

The storage unit 222 includes a main storage unit such as a ROM or a RAM, and/or an auxiliary storage unit such as an HDD or an SSD.

The processor 223 handles various types of processing executed in the controller 220. The processor 223 includes an arithmetic unit such as a CPU. The processor 223 reads and executes a computer program stored in the storage unit 222 to implement various functions.

Here, the object detection device 200 according to the embodiment detects a distance to an object, which serves as one of pieces of information on the object, by using a technique referred to as a so-called time-of-flight (TOF) method. As described in detail below, the TOF method is a technique for calculating a distance to an object in consideration of a difference between a timing at which a transmission wave is transmitted (more specifically, the transmission wave starts to be transmitted) and a timing at which a reception wave is received (more specifically, the reception wave starts to be received).

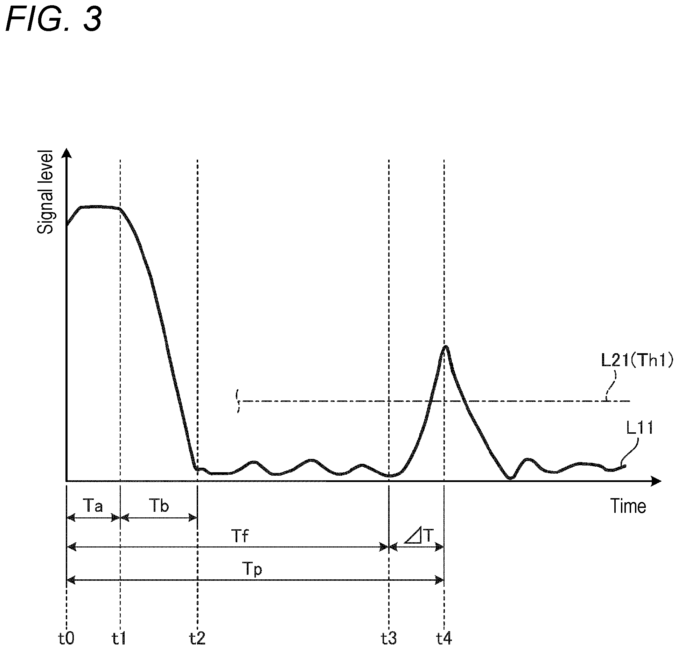

FIG. 3 is an exemplary and schematic diagram for describing an outline of a technique with which the object detection device 200 according to the embodiment detects a distance to an object.

In the example shown in FIG. 3, a temporal change in signal level (for example, amplitude) of the ultrasonic wave transmitted and received by the object detection device 200 according to the embodiment is represented in a graph format. In the graph shown in FIG. 3, the horizontal axis corresponds to time, and the vertical axis corresponds to the signal level of a signal transmitted and received by the object detection device 200 through the wave transmitter-receiver 210 (vibrator 211).

In the graph shown in FIG. 3, a solid line L11 represents an example of an envelope (envelope waveform) representing a temporal change in the signal level of the signal transmitted and received by the object detection device 200, that is, a temporal change in the level of the vibration of the vibrator 211. From the solid line L11, it can be read that the vibrator 211 is driven to vibrate for a time Ta from a timing t0, whereby transmission of a transmission wave is completed at a timing 11, and that the vibration of the vibrator 211 due to inertia continues while attenuating, during a time Tb until a timing t2. Thus, in the graph shown in FIG. 3, the time Tb corresponds to a so-called reverberation time.

At a timing t4 reached after a lapse of a time Tp from the timing t0 at which the transmission of the transmission wave is started, the solid line L11 reaches a peak at which the level of the vibration of the vibrator 211 exceeds (or is equal to or higher than) a predetermined threshold Th1 represented by a dash-dotted line L21. The threshold Th1 is a value set in advance to identify whether the vibration of the vibrator 211 is caused by reception of a reception wave as a transmission wave returned after being reflected by an object to be detected (for example, the object O shown in FIG. 2) or is caused by reception of a reception wave as a transmission wave returned after being reflected by an object other than the object to be detected (for example, the road surface RS shown in FIG. 2).

Note that FIG. 3 shows an example in which the threshold Th1 is set as a constant value that does not change with the lapse of time. However, in the embodiment, the threshold Th1 may be set as a value that changes with the lapse of time.

Here, the vibration having the peak exceeding (or equal to or higher than) the threshold Th1 can be regarded as vibration caused by the reception of the reception wave as the transmission wave returned after being reflected by the object to be detected. On the other hand, vibration having a peak equal to or lower than (or below) the threshold Th1 can be regarded as vibration caused by the reception of the reception wave as the transmission wave returned after being reflected by the object other than the object to be detected.

Thus, from the solid line L11, it can be read that the vibration of the vibrator 211 at the timing t4 is caused by the reception of the reception wave as the transmission wave returned after being reflected by the object to be detected.

Note that in the solid line L11, the vibration of the vibrator 211 attenuates after the timing t4. Thus, the timing t4 corresponds to a timing at which the reception of the reception wave as the transmission wave returned after being reflected by the object to be detected is completed, that is, a timing at which the transmission wave transmitted at the end of the transmission at the timing t1 is returned as the reception wave.

In addition, in the solid line L11, a timing t3 that is the start point of the peak at the timing t4 corresponds to a timing at which the reception of the reception wave as the transmission wave returned after being reflected by the object to be detected starts, that is, a timing at which the transmission wave transmitted at the beginning of the transmission at the timing t0 is returned as the reception wave. Thus, in the solid line L11, a time ΔT between the timing t3 and the timing t4 is equal to the time Ta that is the transmission time of the transmission wave.

In the light of the above, in order to obtain a distance to an object to be detected by using the TOF method, it is necessary to obtain a time Tf that is a time between the timing t0 at which the transmission wave starts to be transmitted and the timing t3 at which the reception wave starts to be received. The time Tf can be obtained by subtracting the time ΔT, which is equal to the time Ta as the transmission time of the transmission wave, from the time Tp, which is a difference between the timing t0 and the timing t4 at which the signal level of the reception wave reaches the peak exceeding the threshold Th1.

The timing t0 at which the transmission wave starts to be transmitted can be easily identified as a timing at which the object detection device 200 starts its operation, and the time Ta that is the transmission time of the transmission wave is determined in advance by setting or the like. Thus, in order to obtain the distance to the object to be detected by using the TOF method, it is ultimately important to identify the timing t4 at which the signal level of the reception wave reaches the peak exceeding the threshold Th 1.

Therefore, there is a known conventional technique of obtaining (calculating) a correlation value corresponding to similarity between a transmission wave and a reception wave, determining whether the similarity is at a level equal to or higher than a predetermined level on the basis of a comparison result between the correlation value and a predetermined threshold, and identifying a timing at which the similarity is determined to be at the level equal to or higher than the predetermined level as the timing t4 at which the reception wave reaches the peak exceeding the threshold Th1. The correlation value is a value that is calculated on the basis of a commonly well-known autocorrelation function or the like, and that reaches a peak in a case where a waveform of a transmission wave and a waveform of a reception wave are similar (match) at a level equal to or higher than a predetermined level.

Incidentally, in a case where at least one of the vehicle 1 on which the object detection device 200 is mounted or the object O is moving, the reception wave may be affected by the Doppler shift, variation in a correlation result obtained after the correlation processing may increase, and it may be difficult to make an accurate comparison with the threshold Th1. In addition, the relative speed changes depending on the movement state of the vehicle 1 or the object O, and thus the accuracy in the comparison with the threshold Th1 may further decrease.

Therefore, in the present embodiment, by configuring the object detection device 200 as follows, achievement is made in reduction in the influence of the Doppler shift and obtaining of an accurate correlation value in a case where a transmission wave and a reception wave are correlated with each other.

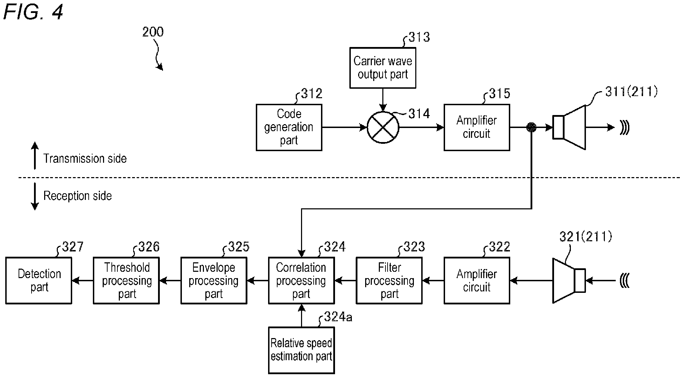

FIG. 4 is an exemplary and schematic block diagram showing a detailed configuration of the object detection device 200 according to the embodiment. Note that, in the example shown in FIG. 4, the configuration on the transmission side and the configuration on the reception side are separated, but the mode shown in the drawing is merely for convenience of description. In the embodiment, as described above, both transmission of a transmission wave and reception of a reception wave are achieved through the (single) wave transmitter-receiver 210 including the (single) vibrator 211.

As shown in FIG. 4, the object detection device 200 includes, as the configuration on the transmission side, a wave transmitter 311, a code generation part 312, a carrier wave output part 313, a multiplier 314, and an amplifier circuit 315. In addition, the object detection device 200 includes, as the configuration on the reception side, a wave receiver 321, an amplifier circuit 322, a filter processing part 323, a correlation processing part 324, a relative speed estimation part 324a, an envelope processing part 325, a threshold processing part 326, and a detection part 327.

Note that a part of the configuration shown in FIG. 4 can be implemented by dedicated hardware (analog circuitry), and the remaining part can be implemented as a result of cooperation between hardware and software, more specifically, as a result of the processor 223 of the controller 220 reading a computer program from the storage unit 222 and executing the computer program.

First, the configuration on the transmission side will be briefly described.

The wave transmitter 311 includes the vibrator 211 described above, and transmits, through the vibrator 211, a transmission wave (for example, an ultrasonic wave) corresponding to a transmission signal (after amplification) output from the amplifier circuit 315. As described below, in the embodiment, a coded signal generated by adding identification information having predetermined code length to a carrier wave is output as the transmission signal that is a source of the transmission wave.

The code generation part 312 generates a signal (pulse signal) corresponding to code of a bit string including, for example, a sequence of bits each having a bit value of 0 or 1. The length of the bit string corresponds to the code length of the identification information to be provided in the transmission signal.

The carrier wave output part 313 outputs a carrier wave as a signal to which the identification information is to be added. The carrier wave is formed as, for example, a sine wave of any frequency.

The multiplier 314 modulates the carrier wave to add the identification information thereto by multiplying the output from the code generation part 312 and the output from the carrier wave output part 313. Then, the multiplier 314 outputs the modulated carrier wave, in which the identification information has been added, to the amplifier circuit 315, as the transmission signal that is the source of the transmission wave. Note that, as the modulation method, one or a combination of two or more of commonly well-known modulation methods such as an amplitude modulation method, a phase modulation method, and a frequency modulation method can be used.

As described above, in the embodiment, the combination of the code generation part 312, the carrier wave output part 313, and the multiplier 314 functions as a transmission signal output part that outputs, to the wave transmitter 311 side, a coded signal generated by adding identification information having predetermined code length to a carrier wave, as a transmission signal that is a source of a transmission wave. The identification information is basically not lost by reflection. Thus, it is possible to more easily or more reliably determine, on the basis of the identification information, similarity between a transmission signal and a reception signal corresponding to a reception wave received when a transmission wave corresponding to the transmission signal is returned by reflection.

The amplifier circuit 315 amplifies the transmission signal output from the multiplier 314, and outputs the amplified transmission signal to the wave transmitter 311. Note that the amplifier circuit 315 also supplies the correlation processing part 324 with the amplified transmission signal, which is used as a reference signal when the correlation processing is executed.

Next, the configuration on the reception side will be briefly described.

The wave receiver 321 includes the vibrator 211 described above, and receives, through the vibrator 211, a transmission wave reflected by an object, as a reception wave. As described above, the transmission wave includes the identification information, and thus the reception wave also includes identification information similar to the identification information included in the transmission wave.

The amplifier circuit 322 amplifies a reception signal that is a signal corresponding to the reception wave received by the wave receiver 321.

The filter processing part 323 executes filtering processing on the reception signal amplified through the amplifier circuit 322 to reduce noise.

The correlation processing part 324 obtains the correlation value, described above, corresponding to the similarity between the transmission wave and the reception wave. More specifically, the correlation processing part 324 uses the transmission signal output from the amplifier circuit 315 as a reference signal with which correlation processing is executed on the reception signal, and obtains the correlation value. As described above, the correlation value is calculated on the basis of a commonly well-known correlation function or the like.

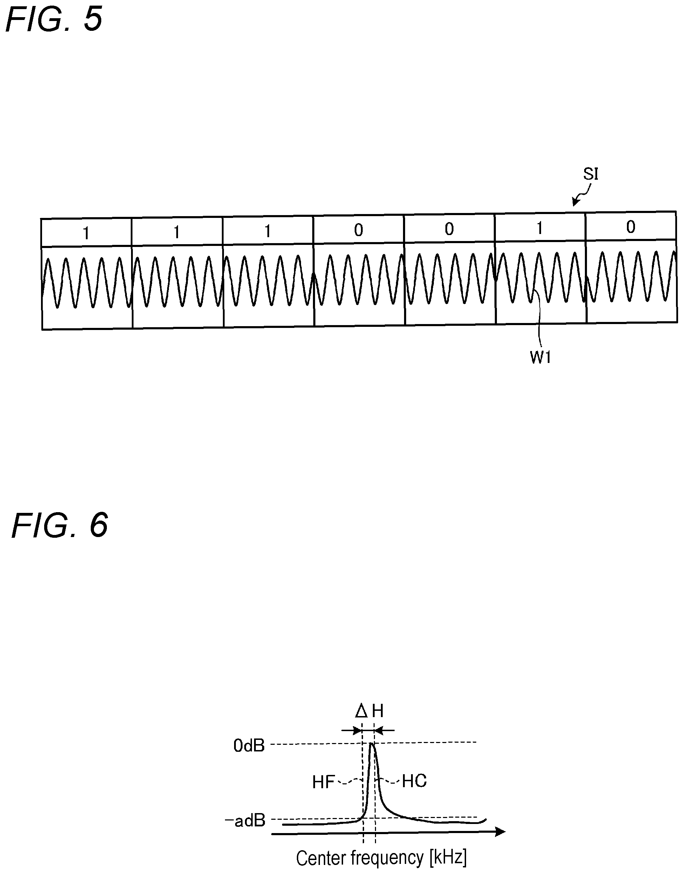

FIG. 5 is a diagram schematically showing a waveform of a reception signal SI received by the wave receiver 321 when a transmission signal with, for example, code having code length of 7, "1110010", serving as identification information, is output from the wave transmitter 311. As described above, the identification information is basically retained, and thus similar code also exists in the reception signal SI.

For example, in a case where the correlation processing is executed in a normal processing, the correlation is obtained with respect to all the waveforms of code length of 7, "1110010". That is, the correlation processing part 324 obtains the correlation value of the reception signal SI by using the waveforms (reference signal) of code length of 7, which are based on the transmission signal supplied from the amplifier circuit 315. In this case, a window width of a reference window for defining a pulse length W1 (the number of pulses) of the reference signal at the time of the correlation is set to a window width corresponding to the code length of 7. As a result, when the reception signal SI is affected by the Doppler shift, the correlation result thereof may also be greatly affected by the Doppler shift, and the SN ratio may vary to have an excellent ratio or a non-excellent ratio, which may lead to increasing variation in the correlation result (correlation value).

FIG. 6 is a diagram showing a correlation result obtained when the correlation processing is executed, where the horizontal axis indicates frequency and the vertical axis indicates the amount of the drop in the correlation value (signal level) when the influence of the Doppler shift is present. In this case, since the pulse length subjected to the correlation processing is long (equivalent to code length of 7), the peak value appears at the center frequency HC, but in a case of being affected by the Doppler shift, the signal level may greatly drop at the position of a frequency HF shifting by ΔH (for example, several KHz) from the center frequency HC (for example, the amount of the drop at this position is -adB). That is, the correlation can be obtained only in the vicinity of the center frequency HC, which results in low accuracy of detecting the peak. Note that for the indication of the relationship among -a, -b, and -c, among which -b and -c are to be described later, each indicating the amount of the drop, -a has a drop larger than -b, and -b has a drop larger than -c.

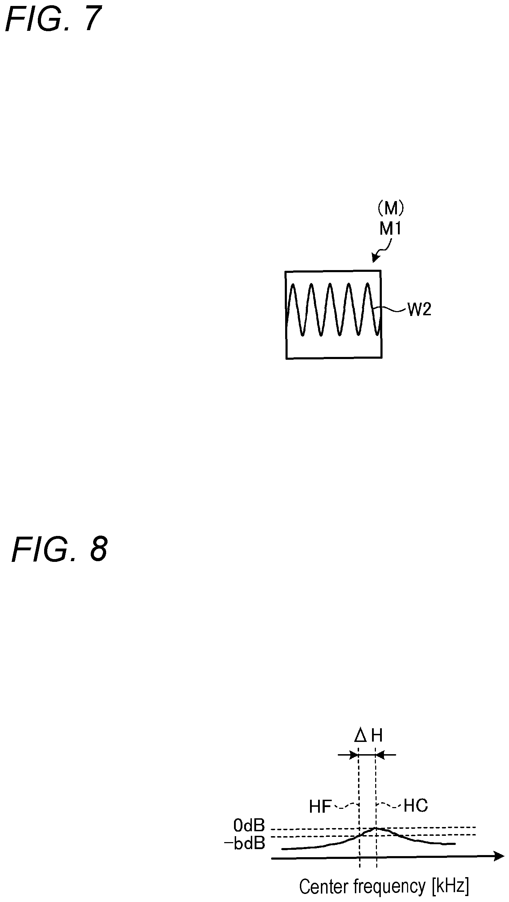

On the other hand, the correlation processing part 324 according to the present embodiment allows change of the window width of the reference window M that defines the number of pulses of the reference signal at the time of correlation. For example, in FIG. 7, the window width of the reference window M is set to a window width of a reference window M1 corresponding to code length of 1 (for example, five pulses). In this case, a pulse length W2 focused for obtaining the correlation is shorter than the pulse length W1 shown in FIG. 5, and thus, even when the reception signal SI is affected by the Doppler shift, the influence of the Doppler shift on the correlation result is reduced, and the SN ratio is improved.

FIG. 8 is a diagram showing a correlation result obtained when correlation processing is executed by using the reference window M1. In this case, the pulse length subjected to the correlation is shorter than the pulse length in the case of the entire code length, and thus it is hard to be affected by the Doppler shift at the time of the correlation, and the drop of the signal level at the position of a frequency HF shifting by ΔH (for example, several KHz) from the center frequency HC due to the influence of the Doppler shift is reduced (for example, the amount of the drop at this position is -bdB). That is, the accuracy of detecting the peak at the time of the correlation is improved.

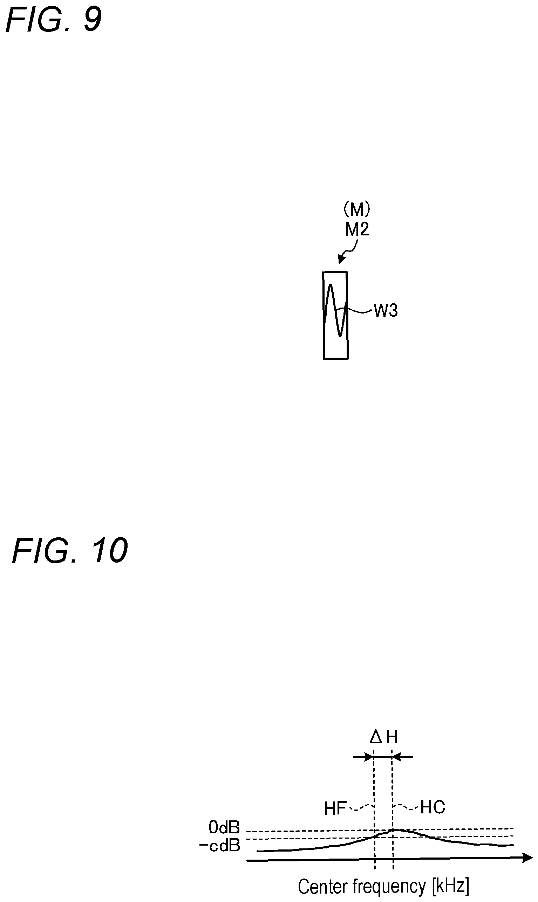

A window width of the reference window M shown in FIG. 9 is set to a window width (for example, one pulse), which is narrower than the window width of the reference window M1. In this case, a pulse length W3 focused for obtaining the correlation is shorter than the pulse length W2 shown in FIG. 7, and thus, even when the reception signal SI is affected by the Doppler shift, the influence of the Doppler shift on the correlation result is further reduced, and the SN ratio is further improved.

FIG. 10 is a diagram showing a correlation result obtained when correlation processing is executed by using the reference window M2. In this case, the pulse length subjected to the correlation is one pulse, and thus it is further hard to be affected by the Doppler shift at the time of the correlation, and the drop of the signal level at the position of a frequency HF shifting by ΔH (for example, several KHz) from the center frequency HC due to the influence of the Doppler shift is further reduced (for example, the amount of the drop at this position is -cdB). That is, the accuracy of detecting the peak at the time of the correlation is further improved.

As described above, by changing the window width of the reference window M (for example, by narrowing the window width), it is possible to make it hard to be affected by the Doppler shift. Note that the Doppler shift increases as the relative speed increases. In other words, by changing the window width of the reference window M in accordance with the relative speed, it is possible to adjust the influence of the Doppler shift received when the correlation processing is executed. For example, when the relative speed is high, the window width of the reference window M is narrowed as shown in FIG. 9. As a result, the correlation processing can be executed in a state of being hardly subjected to the influence of the Doppler shift. That is, it is possible to contribute to improvement of the SN ratio. On the other hand, when the relative speed is low, the window width of the reference window M is widened. In this case, since the relative speed is low, the influence of the Doppler shift is small, and in addition to the fact that the drop of the signal level is small at the position of the frequency HF shifting by ΔH (for example, several KHz) from the center frequency HC described above, it is possible to improve the SN ratio by increasing the pulse length subjected to the correlation. As a result, it is possible to improve the SN ratio for the entire correlation processing.

As described above, the correlation processing part 324 acquires information on the relative speed from the relative speed estimation part 324a to define the window width of the reference window M, whereby it is possible to implement the correlation processing that is hardly subjected to the influence of the Doppler shift.

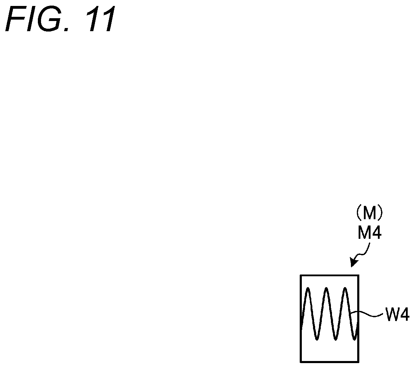

Note that FIG. 7 shows a case in which the reference window M1 (for example, with a pulse length of five pulses) corresponding to code length of 1 is set, and FIG. 9 shows a case in which the reference window M2 corresponding to a pulse length of one pulse is set. In the present embodiment, a value for setting the window width of the reference window M is not limited thereto, and for example, as shown in FIG. 11, the pulse length (the number of pulses to be included in the reference window M) can be appropriately set. In the case shown in FIG. 11, a reference window M3 shows a case in which the pulse length is a pulse length W4 (for example, a pulse length of three pulses). The relationship between the relative speed and the window width of the reference window M may be determined in advance by a test or the like to be, for example, mapped, or may be calculated each time by using a predetermined calculation formula.

In addition, FIG. 7 shows a case of setting the reference window M1 (for example, with a pulse length of five pulses) with a window width corresponding to code length of 1 of the vehicle. In another embodiment, the window width of the reference window M may be changed (set) in units of code length, such as code length of 2 of the vehicle body, code length of 3, or the like. In this case, the setting of the window width of the reference window M is facilitated, the correlation processing is simplified, and it is possible to contribute to reduction in the processing load. Note that the window width of the reference window M can be appropriately set in units of the number of pulses, regardless of the code length, and it is possible to contribute to implementation of correlation processing that is hardly subjected to the influence of the Doppler shift.

Referring again to FIG. 4, the envelope processing part 325 obtains an envelope of a waveform of a signal corresponding to the correlation value obtained by the correlation processing part 324.

The threshold processing part 326 compares the value of the envelope obtained by the envelope processing part 325 with a predetermined threshold.

The detection part 327 identifies the timing (timing t4 shown in FIG. 3) at which the signal level of the reception wave reaches the peak exceeding the threshold, on the basis of the comparison result obtained through the threshold processing part 326, and detects a distance to the object by using the TOF method.

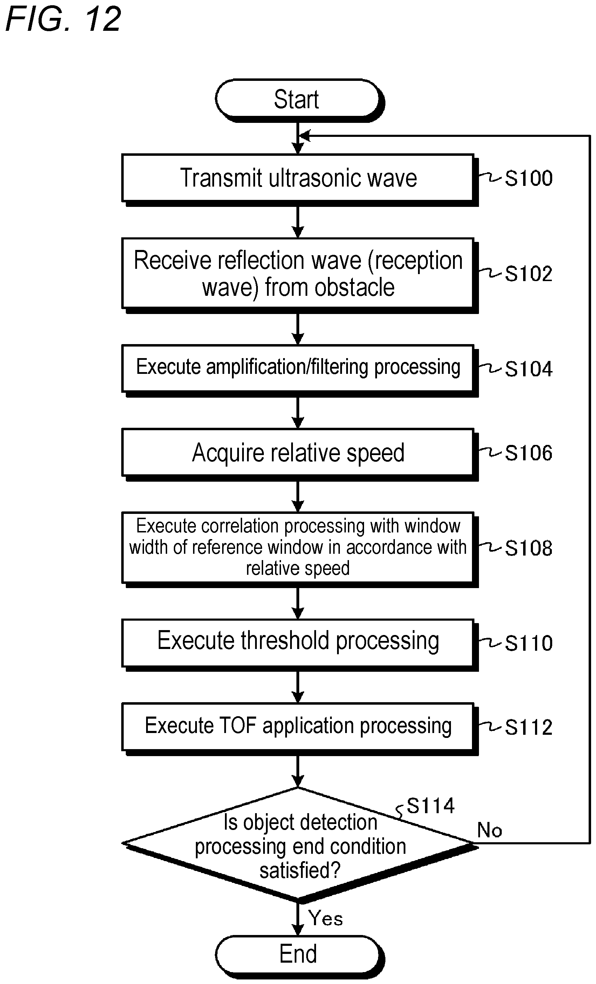

An example of flow of processing related to object detection performed by the object detection device 200 (object detection system) configured as described above will be described with reference to the flowchart of FIG. 12.

First, the object detection device 200 prepares, as a transmission signal that is a source of a transmission wave, a coded signal generated by adding identification information having predetermined code length to a carrier wave through the code generation part 312, the carrier wave output part 313, and the multiplier 314. Then, the transmission signal is amplified through the amplifier circuit 315, and is supplied to the wave transmitter 311. The wave transmitter 311 transmits, as an ultrasonic wave, the transmission wave corresponding to the transmission signal toward the outside of the vehicle 1 (S100).

Then, the wave receiver 321 receives, as a reception wave, a reflection wave as the transmission wave returned to the vehicle 1 side as a result of being reflected by an object (object O) present outside the vehicle 1 (S102).

Then, the received reception wave is amplified through the amplifier circuit 322 and subjected to the filtering processing through the filter processing part 323 (S104), and is supplied to the correlation processing part 324.

The correlation processing part 324 acquires the relative speed between the vehicle 1 and the object (object O) from the relative speed estimation part 324a upon acquiring the reception wave (S106).

As described above, the correlation processing part 324 sets the window width of the reference window M in accordance with the relative speed, executes correlation processing, and obtains a correlation value (S108).

Then, the envelope processing part 325 calculates an envelope of a waveform of a signal corresponding to the correlation value obtained by the correlation processing part 324, and the threshold processing part 326 executes threshold processing of comparing the value of the envelope with a predetermined threshold and determining whether the identification information of the transmission wave and the identification information of the reception wave are similar to each other at a level equal to or higher than a predetermined level on the basis of the comparison result (S110). Thereafter, the detection part 327 identifies a timing at which the similarity of the identification information between the transmission wave and the reception wave becomes the level equal to or higher than the predetermined level, that is, a timing at which the signal level of the reception wave as the transmission wave returned by reflection reaches the peak exceeding the threshold (for example, the timing t4 shown in FIG. 3), and executes TOF application processing of detecting a distance to the object by using the TOF method (S112).

Then, the object detection device 200 confirms whether an object detection processing end condition is satisfied. For example, in a case where the object detection processing end condition is satisfied (Yes in S114) by confirming that an ignition switch of the vehicle 1 is turned off or confirming that an end operation of the object detection processing is performed by a user, this flow is ended temporarily. On the other hand, in a case where the object detection processing end condition is not satisfied (No in S114), the flow returns to the processing in S100, and the pieces of processing described above are repeatedly executed to continue the object detection processing.

As described above, according to the object detection device 200 (object detection system) of the present embodiment, when the influence of the Doppler shift is present between the vehicle 1 (movable body) and the object O (object), it is possible to minimize the influence of the Doppler shift, reduce variation in the correlation result obtained after the correlation processing, and stabilize performance for detecting the object, regardless of the magnitude of the relative speed.

Note that, in the embodiment described above, the technique of the present disclosure is applied to a configuration for detecting information on an object by transmitting and receiving an ultrasonic wave. However, the technique of the present disclosure can also be applied to a configuration for detecting the information on an object by transmitting and receiving a sound wave, a millimeter wave, an electromagnetic wave, or the like as a wave other than an ultrasonic wave.

Although the present embodiment and the modifications have been described above, the above embodiment and modifications are merely illustrative, and are not intended to limit the scope of the invention. The above novel embodiment and modifications can be implemented in various forms, and various omission, substitutions, and changes can be made without departing from the gist of the invention. The above embodiment and modifications are included in the scope and the gist of the invention, and are also included in the invention described in the claims and the scope of equivalents thereof.

### REFERENCE SIGNS LIST

1: Vehicle, 10: Vehicle speed sensor, 200: Object detection device, 210: Wave transmitter-receiver, 211: Vibrator, 220: Controller, 221: Input and output unit, 222: Storage unit, 223: Processor, 311: Wave transmitter, 321: Wave receiver, 324: Correlation processing part, 324a: Relative speed estimation part, and M, M1, M2, M3: Reference window

## Claims

1. An object detection device configured to be mounted to a movable body and configured to detect an object present around the movable body, the device comprising:
a wave transmitter configured to transmit a transmission wave corresponding to a transmission signal;
a wave receiver configured to receive, as a reception wave, the transmission wave reflected by the object;
a relative speed estimation part configured to estimate a relative speed between the movable body and the object;
a correlation processing part configured to change, in accordance with the relative speed, a window width of a reference window that defines the number of pulses of the transmission signal to be correlated with a reception signal corresponding to the reception wave when a correlation value corresponding to similarity between the transmission signal and the reception signal is obtained; and
a detection part configured to detect information on the object, in a case where the correlation value is determined to indicate similarity at a level equal to or higher than a predetermined level.

2. The object detection device according to claim 1, wherein the correlation processing part is configured to change the window width in units of code length of the transmission signal.
